# FASCICULE DE BREVET EUROPEEN

(11) **EP 3 244 977 B1**
(45) Date de publication et mention de la délivrance du brevet: **28.04.2021**
(21) Numéro de dépôt: 16700462.1
(22) Date de dépôt: 13.01.2016
(51) Int. Cl.: G08G 5/00, G01C 21/00

(54) **PROCÉDÉ ET SYSTÈME D'AFFICHAGE D'INFORMATIONS RELATIVES À UN AÉRONEF, DISPOSITIF D'ÉLABORATION DESDITES INFORMATIONS ET PRODUIT PROGRAMME D'ORDINATEUR ASSOCIÉS**
VERFAHREN UND SYSTEM ZUR ANZEIGE VON INFORMATIONEN IN BEZUG AUF EIN FLUGZEUG, VORRICHTUNG ZUR ERZEUGUNG DER BESAGTEN INFORMATIONEN UND ZUGEHÖRIGES COMPUTERPROGRAMMPRODUKT
METHOD AND SYSTEM FOR DISPLAYING INFORMATION RELATING TO AN AIRCRAFT, DEVICE FOR PRODUCING SAID INFORMATION AND RELATED COMPUTER PROGRAM PRODUCT

(30) Priorité: 14.01.2015 FR 1500072
(43) Date de publication de la demande: 22.11.2017
(73) Titulaire: Thales, 92400 Courbevoie (FR)
(72) Inventeur: JACQUIER, Vincent, 31036 Toulouse Cedex 1 (FR); LORIDO, Didier, 31036 Toulouse Cedex1 (FR); ZAMBETTI, Florence, 31036 Toulouse Cedex 1 (FR)
(74) Mandataire: Lavoix
(86) Numéro de dépôt international: PCT/EP2016/050567
(87) Numéro de publication internationale: WO 2016/113306

(56) Documents cités:
- EP-A2- 2 434 469
- EP-A2- 2 490 199
- EP-A2- 2 595 136
- GB-A- 2 488 916
- US-A1- 2012 218 127
- US-A1- 2013 027 226
- US-B1- 6 381 538

## Description

La présente invention concerne un procédé d'affichage d'informations relatives à un aéronef, le procédé étant mis en œuvre par ordinateur.

L'invention concerne également un dispositif électronique associé d'élaboration d'informations relatives à l'aéronef.

L'invention concerne également un système d'affichage d'informations comprenant un tel dispositif d'élaboration desdites informations et un module d'affichage des informations élaborées.

L'invention concerne le domaine des systèmes, de préférence embarqués, d'aide à la navigation aérienne, concernant la gestion de l'information aéronautique et météorologique, également appelée information AIS-MET (de l'anglais *Aeronautical Information Services- METeorology*)*,* à destination des utilisateurs chargés de la conduite des aéronefs qu'ils soient à bord ou en dehors de ces aéronefs.

EP 2 595 136 A2 décrit un procédé d'affichage d'informations météorologiques avec des messages METAR, SIGMET et AIRMET et d'informations aéronautiques avec des messages NOTAM. Le personnel au sol sélectionne des régions météorologiques particulières parmi les messages météorologiques, puis ajoute une information textuelle afin d'annoter une image acquise de suivi du vol, l'image annotée étant ensuite transmise à destination de l'aéronef.

EP 2 434 469 A2 décrit un système avionique recevant des messages textuels de type datalink, notamment des messages météorologiques SIGMET, AIRMET, et/ou des messages d'informations aéronautiques ATIS, NOTAM, puis déterminant l'impact opérationnel des messages datalink reçus en les parcourant, et en mettant en œuvre des techniques d'analyse textuelle, telles que des analyses statistiques et/ou sémantiques, sans fournir davantage de précision quant à la manière d'effectuer ces analyses.

GB 2 488 916 A décrit un dispositif d'affichage interactif présentant une information météorologique contextuelle par rapport à une trajectoire prédéterminée d'un aéronef.

Les systèmes actuels d'aide à la navigation aérienne présentent généralement l'information AIS-MET de manière brute et complète sous forme de messages successifs. Ensuite, l'utilisateur interprète et filtre mentalement cette information reçue, en fonction de la situation de l'aéronef, afin de ne prendre en compte que les données pertinentes parmi les messages reçus.

A titre d'exemple, l'équipage d'un aéronef reçoit des bulletins météo par un système ACARS (de l'anglais *Aircraft Communication Addressing and Reporting System*)*,* ou par phonie si l'aéronef n'est pas équipé de la liaison de données correspondante. Puis, l'équipage les imprime, et les analyse pour évaluer la situation météorologique actuelle et future pour l'aéronef.

Toutefois, cette tâche constitue une charge de travail substantielle pour l'utilisateur, et elle implique un délai relativement long pour l'analyse de cette information AIS-MET reçue sous forme de messages successifs. Cette tâche est en outre assez fastidieuse et répétitive lorsque la quantité reçue de données est importante, ce qui engendre en outre un risque d'erreur de l'utilisateur.

Le but de l'invention est alors de proposer un procédé et un système d'affichage d'informations relatives à un aéronef, permettant de faciliter l'analyse d'un message reçu parmi un message météorologique et un message d'information aéronautique, tel qu'un message de type AIS-MET.

A cet effet, l'invention a pour objet un procédé d'affichage d'informations relatives à un aéronef, selon la revendication 1.

Le procédé selon l'invention permet alors d'apporter à l'utilisateur une aide dans son analyse d'un message reçu, tel qu'un message AIS-MET, en filtrant et en mettant en avant les données pertinentes pour sa mission, tenant compte du plan de mission et/ou de la position de l'aéronef associé à une corrélation avec l'information aéronautique et/ou météorologique reçue. Le procédé selon l'invention rend ainsi la tâche de l'utilisateur moins fastidieuse, et lui permet d'effectuer plus rapidement sa tâche d'analyse ultérieure du message reçu, tout en diminuant le risque d'erreur de l'utilisateur.

Ainsi, le procédé selon l'invention permet de corréler des informations aéronautiques et/ou météorologiques acquises avec le plan de mission de l'aéronef, également appelé plan de vol, et/ou avec la position de l'aéronef, puis d'afficher les informations corrélées.

Suivant d'autres aspects avantageux de l'invention, le procédé d'affichage est selon l'une quelconque des revendications 2 à 9.

L'invention a également pour objet un produit programme d'ordinateur selon la revendication 10.

L'invention a également pour objet un dispositif électronique d'élaboration d'informations relatives à un aéronef, selon la revendication 11.

L'invention a également pour objet un système d'affichage d'informations relatives à un aéronef, selon la revendication 12.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une représentation schématique d'un aéronef comportant des systèmes avioniques, dont un système d'affichage d'informations relatives à l'aéronef, l'aéronef communiquant avec des systèmes basés au sol, le système d'affichage d'informations comportant un dispositif d'élaboration desdites informations en vue de leur affichage et un module d'affichage des informations élaborées,
- la figure 2 est un organigramme d'un procédé selon l'invention d'affichage d'informations relatives à l'aéronef,
- la figure 3 est une représentation, en deux dimensions, de critères de recherche d'un ou plusieurs identifiants d'objets de mission contenus dans un message acquis, le message acquis étant un message météorologique ou un message d'information aéronautique, ces critères de recherche étant, selon un exemple non couvert par l'invention, fonction du positionnement de l'objet de mission,
- la figure 4 est une représentation analogue à celle de la figure 3, en trois dimensions,
- la figure 5 est une vue d'informations affichées selon un exemple non couvert par l'invention, et
- les figures 6 à 12 sont des vues d'informations affichées selon l'invention, le critère de recherche selon l'invention étant l'inclusion de l'identifiant recherché d'objet de mission à la fois dans le message acquis et dans un plan de mission reçu.

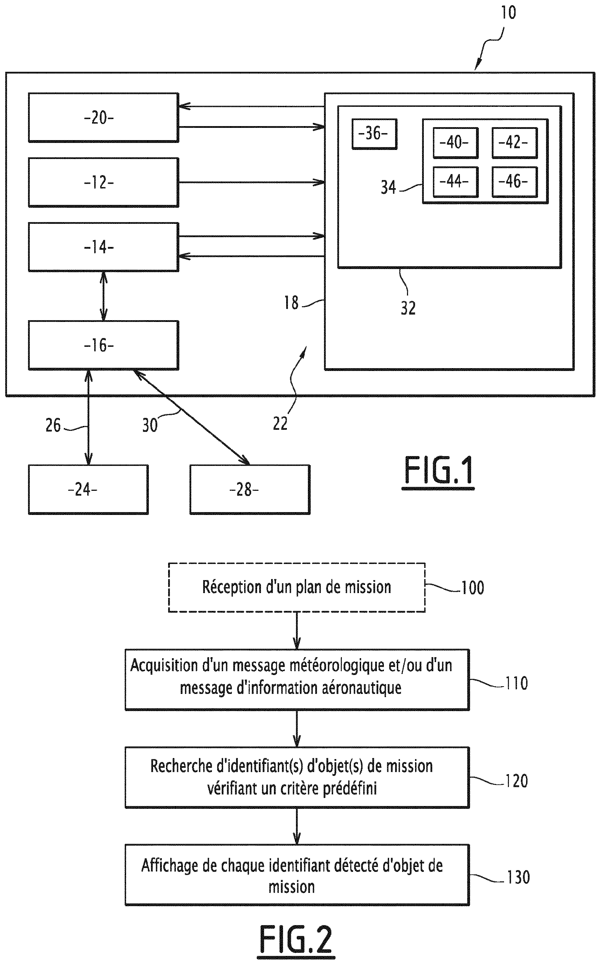

Sur la figure 1, un aéronef 10 comprend un système 12 de gestion du vol de l'aéronef, également appelé FMS (de l'anglais *Flight Management System*)*,* un système de communication 14 et un ou plusieurs émetteurs-récepteurs radioélectriques 16 reliés au système de communication 14.

L'aéronef 10 comprend un dispositif électronique 18 d'élaboration d'informations relatives à l'aéronef et un module 20 d'affichage des informations élaborées, le dispositif d'élaboration 18 et le module d'affichage 20 formant un système 22 d'affichage desdites informations relatives à l'aéronef.

L'aéronef 10 est, par exemple, un avion. En variante, l'aéronef 10 est un aéronef à voilure tournante, tel qu'un hélicoptère ou tout autre véhicule aérien.

L'aéronef 10 est configuré pour communiquer, via ses émetteurs-récepteurs radioélectriques 16, avec des systèmes électroniques basés au sol, tels qu'un ou plusieurs systèmes 24 de diffusion d'informations météorologiques par l'intermédiaire d'une première liaison radioélectrique 26, ou encore tels qu'un ou plusieurs systèmes 28 de transmission d'informations aéronautiques par l'intermédiaire d'une deuxième liaison radioélectrique 30.

Le système de gestion du vol 12 est, par exemple, relié à une pluralité d'organes de mesure, non représentés et connus en soi, tels qu'une référence inertielle comportant des accéléromètres et des gyroscopes, un radioaltimètre, un système de géolocalisation. Le système de gestion du vol 12 est propre à déterminer le positionnement, l'attitude et la trajectoire future de l'aéronef 10 et à estimer différentes grandeurs, telles que l'altitude, la vitesse, à partir des mesures effectuées par les organes de mesure.

Le système de gestion du vol 12 comporte une mémoire, non représentée, apte à stocker un plan de vol de l'aéronef 10, également appelé plan de mission. Le plan de mission comporte des objets de mission, tels qu'un aéroport ou une zone d'espace aérien.

Le système de communication 14 est connu en soi, et est configuré pour communiquer, via les émetteurs-récepteurs radioélectriques 16, avec les systèmes électroniques basés au sol, tels que les systèmes de diffusion d'informations météorologiques 24 et les systèmes de transmission d'informations aéronautiques 28.

Le système de communication 14 comporte une partie numérique, non représentée, pour la communication avec des liaisons numériques de données (de l'anglais *data link*)*,* et une partie audio, non représentée, pour la communication en phonie.

Chaque émetteur-récepteur radioélectrique 16 est connu en soi, et est adapté pour émettre et/ou recevoir des signaux radioélectriques, notamment à destination et/ou depuis des systèmes électroniques 24, 28 basés au sol, aussi bien en phonie qu'en liaison de données.

Le dispositif électronique d'élaboration 18 comporte une unité de traitement 32, formée par exemple d'une mémoire 34 et d'un processeur 36 associé à la mémoire 34.

Le module d'affichage 20 comporte un écran d'affichage, non représenté, destiné à afficher notamment les informations fournies par le dispositif d'élaboration 18, cet écran étant par exemple l'écran d'un autre système avionique.

Chaque système de diffusion d'informations météorologiques 24 est connu en soi. Le système de diffusion d'informations météorologiques 24 supporte, par exemple, un service METAR (de l'anglais *METeorological Aerodrome Report*) qui fournit des rapports d'observation météorologique en zone aéroportuaire. Le système METAR est configuré pour diffuser un message METAR, toutes les heures (ou demi-heures) à heure fixe. Le message METAR, connu en soi, comporte par exemple une prévision de tendance (supplément TEND ou TREND) pour les deux heures qui suivent l'observation concernant des changements significatifs, sur le vent, la visibilité, le temps présent et les nuages significatifs.

En complément ou en variante, le système de diffusion d'informations météorologiques 24 supporte un service SPECI qui fournit également des rapports d'observation météorologique en zone aéroportuaire. Le système SPECI est configuré pour diffuser un message SPECI, en dehors des périodes d'émission des messages METAR. Comme connu en soi, le message SPECI est élaboré lors d'une aggravation (M) ou d'une amélioration (B) de certains paramètres météorologiques.

Les messages textuels METAR et SPECI sont rédigés en conformité avec les règles de l'annexe 11 de l'ICAO (de l'anglais *International Civil Aviation Organization*)*,* également appelée OACI pour Organisation de l'Aviation Civile Internationale.

En complément ou en variante, le système de diffusion d'informations météorologiques 24 supporte un service TAF (de l'anglais *Terminal Aerodrome Forecast*) qui fournit des rapports de prédiction météorologique en zone aéroportuaire. Le système TAF est configuré pour diffuser un seul type de message TAF par aérodrome : soit un message TAF court avec prédiction à 9h, soit un message TAF long avec prédiction à 24 h ou à 30 h. Les messages TAF courts sont émis à partir de 0h UTC toutes les 3 heures et les messages TAF longs sont émis à partir de 0h UTC toutes les 6 heures.

En complément ou en variante, le système de diffusion d'informations météorologiques 24 supporte un service SIGMET (de l'anglais *SIGnificant METeorological information*) qui fournit des bulletins d'alerte météorologique dont le but est d'aviser les pilotes d'un phénomène météo significatif en route qui pourrait affecter la sécurité du vol. Le système SIGMET est configuré pour diffuser un message SIGMET au plus tard 4h avant l'heure de prédiction du phénomène (avec une exception pour les nuages volcaniques), et pour fournir alors une prédiction à 4h.

En complément ou en variante, le système de diffusion d'informations météorologiques 24 supporte un service système AIRMET qui fournit des bulletins d'alerte météorologique dont le but est d'aviser les pilotes d'un phénomène météo significatif en dessous du FL100. Le système AIRMET est configuré pour diffuser un message AIRMET au plus tard 4h avant l'heure de prédiction du phénomène (avec une exception pour les nuages volcaniques), et pour fournir alors une prédiction à 4h.

Les messages SIGMET, AIRMET sont diffusés sous forme de messages vocaux sur les radiofréquences aéronautiques et/ou sous forme de messages numériques via des liaisons numériques de données correspondantes.

En complément ou en variante, le système de diffusion d'informations météorologiques 24 supporte un service DVOLMET configuré pour diffuser un ou des messages VOLMET. Le service DVOLMET est un service numérique d'informations météorologiques pour un aéronef en vol. Selon l'annexe 3 de l'ICAO, la diffusion VOLMET est une fourniture de routines courantes et de rapports spéciaux au format METAR, SPECI, de prévisions d'aérodrome au format TAF, et d'alerte météorologique aéronautique (SIGMET), au moyen d'émissions vocales continues et répétées.

Chaque message météorologique est alors choisi parmi le groupe consistant en : un message METAR, un message SPECI, un message TAF, un message SIGMET, un message AIRMET et un message VOLMET.

Chaque système de transmission d'informations aéronautiques 28 est connu en soi. Le système de transmission d'informations aéronautiques 28 supporte, par exemple, un service ATIS qui distribue automatiquement des informations sur la zone terminale aéroportuaire. Le système ATIS est configuré pour diffuser un message ATIS sous forme de message vocal sur les radiofréquences aéronautiques et/ou sous forme de message numérique via une liaison de données correspondante. Le message ATIS est conforme aux règles de l'annexe 11 de l'ICAO.

En complément ou en variante, le système de transmission d'informations aéronautiques 28 supporte un service de transmission de messages aéronautiques particuliers, configuré pour diffuser un message NOTAM (de l'anglais *NOTice to AirMen*)*,* un message SNOWTAM, ou encore un message ASHTAM, par exemple en cas de notification(s) de piste, voie de circulation, tablier avec un risque ou une présence de neige, de glace et/ou d'eau stagnante (message SNOWTAM), ou encore en cas de notification(s) concernant un changement d'activité volcanique qui a de l'importance pour l'exploitation, une éruption volcanique et/ou un nuage de cendres volcaniques (message ASHTAM). La transmission des messages NOTAM, SNOWTAM et ASHTAM est conforme au chapitre 5 de l'annexe 15 de l'ICAO.

Chaque message d'information aéronautique est alors choisi parmi le groupe consistant en : un message ATIS, un message NOTAM, un message SNOWTAM et un message ASHTAM.

Chaque message météorologique et chaque message d'information aéronautique comporte au moins un identifiant d'objet de mission, chaque objet de mission étant de préférence un aéroport ou une zone d'espace aérien. L'homme du métier comprendra que, selon l'invention, l'aéroport s'entend au sens large comme tout lieu référencé auprès de l'ICAO, permettant le décollage ou l'atterrissage de l'aéronef 10, et s'entend donc le cas échéant également comme un aérodrome, comme un héliport, ou toute surface de lancement et d'atterrissage d'aéronefs, comme pour les drones.

Les messages METAR, SPECI, TAF, SIGMET, AIRMET, VOLMET, NOTAM, SNOWTAM et ASHTAM sont des messages textuels. Autrement dit, les messages METAR, SPECI, TAF, SIGMET, AIRMET, VOLMET, NOTAM, SNOWTAM et ASHTAM comprennent chacun un ensemble de caractères alphanumériques. Le formatage de ces messages textuels est en concordance avec les règles édictées par l'ICAO pour les services aéronautiques.

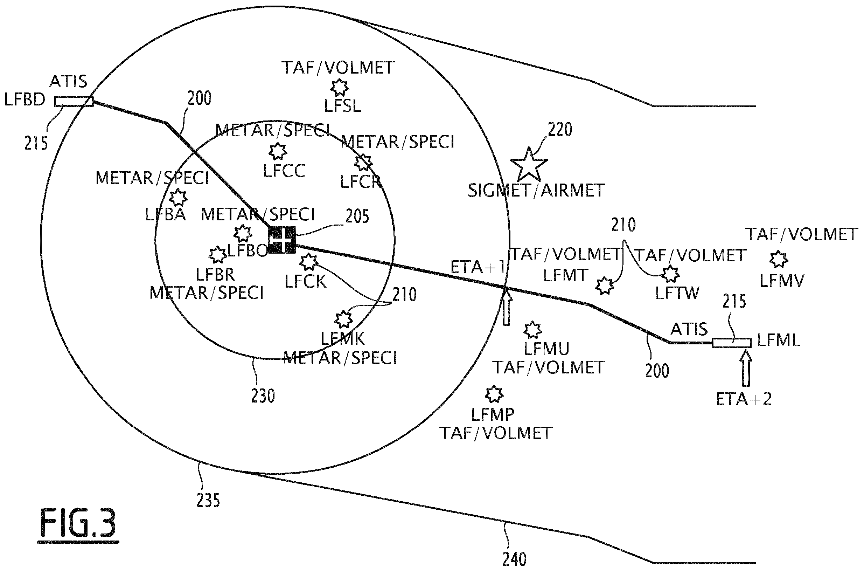

Chaque identifiant d'objet de mission est conforme au document ICAO 7910. Chaque identifiant d'objet de mission est alors de préférence en forme d'un code à 4 lettres, c'est-à-dire constitué de 4 caractères alphabétiques, comme cela est visible sur les figures 3 à 12.

La mémoire 34 comporte un logiciel 40 d'acquisition d'au moins un message parmi un message météorologique et un message d'information aéronautique et un logiciel 42 de réception d'un plan de mission.

La mémoire 34 comporte un logiciel 44 de recherche, parmi le ou les identifiants d'objet de mission contenus dans chaque message acquis, d'au moins un identifiant d'objet de mission vérifiant au moins un critère parmi des premier, deuxième et troisième critères prédéfinis. Le premier critère est fonction d'un plan de mission reçu. Le deuxième critère est fonction d'une position courante de l'aéronef 10, et le troisième critère est fonction à la fois de la position courante de l'aéronef 10 et du plan de mission reçu.

La mémoire 34 comporte un logiciel 46 d'élaboration, en cas de détection d'au moins un identifiant d'objet de mission vérifiant au moins l'un des premier, deuxième et troisième critères prédéfinis, d'un message d'informations contenant chaque identifiant détecté d'objet de mission. Le message d'informations est ensuite destiné à être notamment affiché par le module d'affichage 20.

Le processeur 36 est configuré pour permettre l'exécution de chacun des logiciels 40, 42, 44 et 46.

Lorsqu'exécutés par le processeur 36, le logiciel d'acquisition 40, le logiciel de réception 42, le logiciel de recherche 44, et respectivement le logiciel d'élaboration 46 forment un module d'acquisition, un module de réception, un module de recherche, et respectivement un module d'élaboration.

En variante, le module d'acquisition 40, le module de réception 42, le module de recherche 44 et le module d'élaboration 46 sont réalisés sous forme de composants logiques programmables, ou encore sous forme de circuits intégrés dédiés.

Le module d'acquisition 40 est configuré pour acquérir au moins un message parmi un message météorologique et un message d'information aéronautique, le message météorologique étant de préférence choisi parmi le groupe consistant en : un message METAR, un message SPECI, un message TAF, un message SIGMET, un message AIRMET et un message VOLMET ; et le message d'information aéronautique étant de préférence choisi parmi le groupe consistant en : un message ATIS, un message NOTAM, un message SNOWTAM et un message ASHTAM.

Le module d'acquisition 40 est, par exemple, configuré pour acquérir l'ensemble des messages diffusés de manière continue à partir des systèmes météorologiques 24 et d'informations aéronautiques 28, situés à portée de communication radioélectrique de l'aéronef 10.

En complément ou en variante, le module d'acquisition 40 est configuré pour, à partir de types de messages choisis par l'équipage ou prédéfinis parmi les types précités de messages, et à partir des identifiants d'objet de mission contenus dans le plan de mission, envoyer une requête aux systèmes météorologiques 24 et d'informations aéronautiques 28, ces derniers renvoyant ensuite le ou les messages correspondant à la requête.

Le module de réception 42 est configuré pour recevoir le plan de mission de l'aéronef 10.

Le module de réception 42 est, par exemple, configuré pour recevoir le plan de mission de la part du système de gestion du vol 12.

En variante, le module de réception 42 est configuré pour recevoir le plan de mission de la part d'un système de contrôle du trafic aérien ou de la part d'un système de gestion des vols de la compagnie aérienne associée à l'aéronef 10 via un réseau de type ACARS ou ATN.

En variante encore, le module de réception 42 est configuré pour récupérer le plan de mission à partir d'une base de données de plans de mission prédéfinis, non représentée, stockée par exemple dans la mémoire 34 du dispositif d'élaboration.

Le module de recherche 44 est configuré pour rechercher, parmi le ou les identifiants d'objet de mission contenus dans chaque message acquis, au moins un identifiant d'objet de mission vérifiant au moins un critère parmi les premier, deuxième et troisième critères prédéfinis. Autrement dit, le module de recherche 44 est adapté pour détecter dans chaque message acquis, lorsqu'il(s) existe(nt), un ou plusieurs identifiants d'objet de mission vérifiant au moins l'un des trois critères prédéfinis. Le module de recherche 44 effectue alors une corrélation de chaque message acquis par le module d'acquisition 40 avec au moins l'un des trois critères prédéfinis.

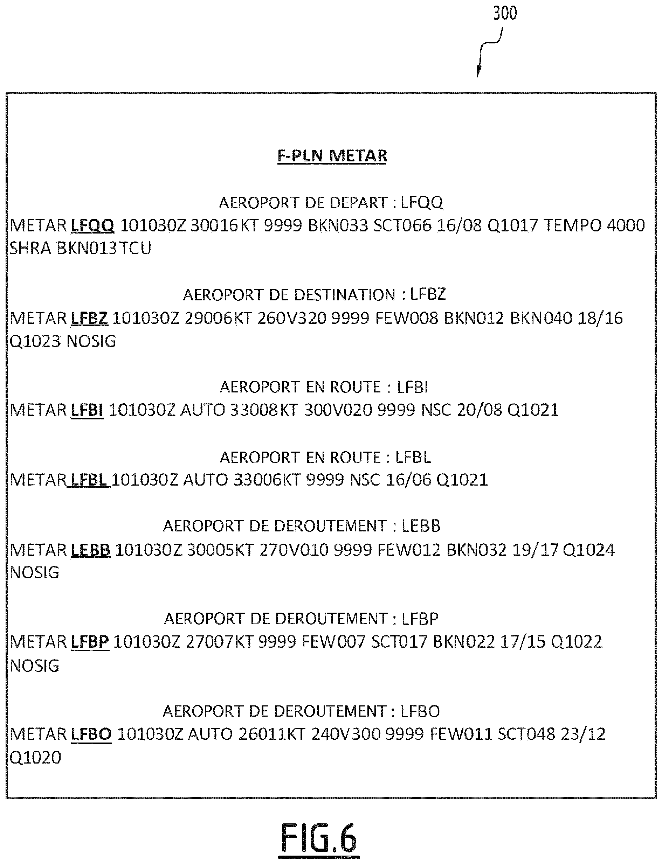

Le premier critère est, comme indiqué précédemment, fonction du plan de mission reçu par le module de réception 42. Le premier critère est, selon l'invention, l'inclusion de l'identifiant recherché d'objet de mission à la fois dans le message acquis et dans le plan de mission reçu, comme cela sera décrit plus en détail par la suite en regard des figures 6 à 12.

Le deuxième critère est fonction de la position courante de l'aéronef. Le deuxième critère est, par exemple, le positionnement de l'objet de mission associé à l'identifiant recherché au voisinage de la position courante de l'aéronef 10, comme cela sera décrit plus en détail ci-après en regard des figures 3 à 5.

Le module de recherche 44 est de préférence configuré pour rechercher le ou les identifiants d'objet de mission suivant le deuxième critère prédéfini seulement parmi le ou les messages météorologiques acquis contenant des informations météorologiques observées. Le module de recherche 44 est alors configuré pour rechercher le ou les identifiants d'objet de mission suivant le deuxième critère prédéfini de préférence seulement parmi les messages METAR et SPECI acquis par le module d'acquisition 40.

Le troisième critère est fonction à la fois de la position courante de l'aéronef et du plan de mission reçu. Le troisième critère est, par exemple, le positionnement de l'objet de mission associé à l'identifiant recherché au voisinage d'au moins une portion de la trajectoire estimée de l'aéronef depuis sa position courante, comme cela sera également décrit plus en détail ci-après en regard des figures 3 à 5. Chaque portion de la trajectoire estimée de l'aéronef depuis sa position courante est, par exemple, calculée par le système de gestion du vol 12, puis reçue par le module de réception 42 de la part du système de gestion du vol 12.

Le module de recherche 44 est de préférence configuré pour rechercher le ou les identifiants d'objet de mission suivant le troisième critère prédéfini seulement parmi le ou les messages météorologiques acquis contenant des informations météorologiques estimées. Le module de recherche 44 est alors configuré pour rechercher le ou les identifiants d'objet de mission suivant le troisième critère prédéfini de préférence seulement parmi les messages TAF et VOLMET acquis.

Le module d'élaboration 46 est alors configuré pour élaborer un ou plusieurs messages d'informations contenant notamment chaque identifiant détecté d'objet de mission. Le module d'élaboration 46 est en outre apte à transmettre au module d'affichage 20 chaque message d'informations élaboré, en vue de l'affichage du ou des identifiants détectés d'objet de mission.

Le ou les identifiants détectés d'objet de mission sont affichés de manière différente par aux autres identifiants d'objet de mission éventuellement affichés. L'affichage de manière différente est, par exemple, un affichage en surbrillance, un affichage en gras, un affichage en souligné, ou encore un affichage en gras et en souligné.

Le fonctionnement du dispositif 18 d'élaboration d'informations relatives à l'aéronef 10 et du système 22 d'affichage desdites informations va désormais être expliqué à l'aide de la figure 2 représentant un organigramme du procédé d'affichage selon l'invention.

Lors d'une étape initiale 100 le module de réception 42 reçoit le plan de mission de l'aéronef 10 de la part du système de gestion du vol 12. Le module de réception 42 reçoit de manière plus générale des informations relatives à la position et à la trajectoire de l'aéronef 10, préalablement calculées par le système de gestion du vol 12.

Lors de cette étape initiale 100, le module de réception 42 reçoit par exemple le plan de vol actif incluant les points de passage à proximité de la position courante de l'aéronef, et la date estimée d'arrivée en ces points de passage. Le module de réception 42 reçoit également des points de passages alternatifs et un plan de vol alternatif, ainsi qu'une date d'arrivée estimée pour ce plan de vol alternatif. Le module de réception 42 reçoit également la position courante de l'aéronef et la date UTC courante. En complément, le module de réception 42 reçoit des paramètres d'affichage de navigation configurés par le pilote.

Le module d'acquisition 40 effectue ensuite, lors de l'étape 110, l'acquisition d'au moins un message parmi le ou les messages météorologiques diffusés par le ou les systèmes de diffusion d'informations météorologiques 24 à portée de communication radioélectrique et le ou les messages d'information aéronautique diffusés par le ou les systèmes de transmission d'informations aéronautiques 28. Le ou les messages météorologiques acquis sont de préférence des messages METAR, SPECI, TAF, SIGMET, AIRMET et/ou VOLMET. Le ou les messages d'information aéronautique acquis sont de préférence des messages ATIS, NOTAM, SNOWTAM et/ou ASHTAM.

Lors de cette étape d'acquisition 110, en complément facultatif, le module d'acquisition 40 supprime tous les bulletins météorologiques acquis pour lesquels la période de validité est expirée par rapport à la date UTC courante reçue lors de l'étape 100. En variante, lors de cette étape 110, les seuls bulletins météorologiques acquis sont ceux présentant une période de validité supérieure à la date UTC courante reçue, c'est-à-dire encore valide par rapport à la date UTC courante.

Lors de l'étape suivante 120, le module de recherche 44 recherche, parmi le ou les identifiants d'objet de mission contenus dans chaque message acquis, au moins un identifiant d'objet de mission vérifiant au moins l'un des premier, deuxième et troisième critères prédéfinis. Comme décrit précédemment, chaque objet de mission pris en compte lors de l'étape de recherche 120 est de préférence un aéroport ou une zone d'espace aérien, et chaque identifiant d'objet de mission est alors de préférence un identifiant à 4 caractères alphabétiques, conforme au document ICAO 7910.

Lors de l'étape suivante 130, le module d'élaboration 46 crée d'abord un ou plusieurs messages d'informations contenant chaque identifiant détecté d'objet de mission. Le module d'élaboration 46 transmet ensuite au module d'affichage 20 chaque message d'informations créé pour l'affichage du ou des identifiants détectés d'objet de mission.

Lors de cette étape 130, le module d'affichage 20 affiche enfin chaque identifiant détecté d'objet de mission, de manière différente par aux autres identifiants d'objet de mission lorsque ceux-ci sont affichés.

En complément facultatif, l'étape 100 est réitérée pour recevoir un éventuel plan de mission modifié et/ou l'étape 110 est réitérée pour acquérir un message météorologique ou d'information aéronautique mis à jour ou nouveau. En cas de réception d'un plan de mission modifié et/ou d'acquisition d'un message météorologique ou d'information aéronautique mis à jour, les étapes 120 et 130 sont alors réitérées pour effectuer automatiquement une nouvelle recherche et élaborer automatiquement un message d'informations tenant compte de la modification du plan de mission et/ou de la mise à jour du message météorologique ou d'information aéronautique.

Le système d'affichage 22 et le procédé d'affichage selon l'invention apportent alors à l'équipage de l'aéronef une aide dans son analyse d'un message météorologique ou d'information aéronautique reçu, en filtrant et en mettant en avant les données pertinentes pour sa mission, en tenant compte du plan de mission et/ou de la position de l'aéronef. Ils rendent ainsi la tâche de l'équipage moins fastidieuse, et lui permettent d'effectuer plus rapidement sa tâche d'analyse du message reçu, tout en diminuant le risque d'erreur.

Autrement dit, le dispositif d'élaboration 18 permet de corréler des informations aéronautiques et/ou météorologiques acquises avec le plan de mission de l'aéronef 10, et/ou avec la position de l'aéronef. Puis, le système d'affichage 22 permet d'informer l'équipage de la corrélation calculée, en affichant de manière particulière les informations corrélées.

Les étapes de recherche 120 et d'affichage 130 vont être décrites plus en détail par la suite, selon un premier exemple non couvert par l'invention, en regard des figures 3 à 5, puis selon l'invention, en regard des figures 6 à 12.

Le premier exemple correspond à la mise en œuvre, lors de l'étape de recherche 120, de l'un des deuxième et troisième critères prédéfinis.

Le premier exemple permet de corréler avec le plan de vol de l'aéronef 10 les informations aéronautiques et/ou météorologiques dans le ou les messages acquis, et de filtrer uniquement les informations associées à des localisations qui seront pertinentes au moment du survol du plan de vol. Selon ce premier exemple le système d'affichage 22 permet alors un affichage global de l'information filtrée sur le plan de vol, à la demande de l'équipage, de manière à réduire la charge de travail des pilotes dans la prise en compte des conditions météorologiques et/ou des informations aéronautiques impactant leur vol.

Pour cela, chaque message acquis est automatiquement analysé et filtré par le module de recherche 44 suivant au moins l'un des deuxième et troisième critères prédéfinis, de manière à ne conserver que l'information pertinente autour des points de séquence du vol programmé. En complément facultatif, l'information manquante est automatiquement demandée si le système associé 24, 28 est disponible, afin de construire un affichage encore plus complet de la situation météorologique que rencontrera l'équipage au fur et à mesure de la progression du vol. En complément, lorsque le message acquis est un message vocal, celui-ci est en outre reconnu et numérisé par le module d'acquisition 40, pour pouvoir être ensuite analysé.

Le dispositif d'élaboration 18 et le système d'affichage 22 s'adaptent alors dynamiquement à tout délai ou déroutement de l'aéronef 10, en affichant l'information météorologique et/ou aéronautique conforme à l'heure estimée de passage de l'aéronef 10 sur la zone où les conditions météorologiques sont observées/prévues, allégeant ainsi considérablement la charge de travail de l'équipage.

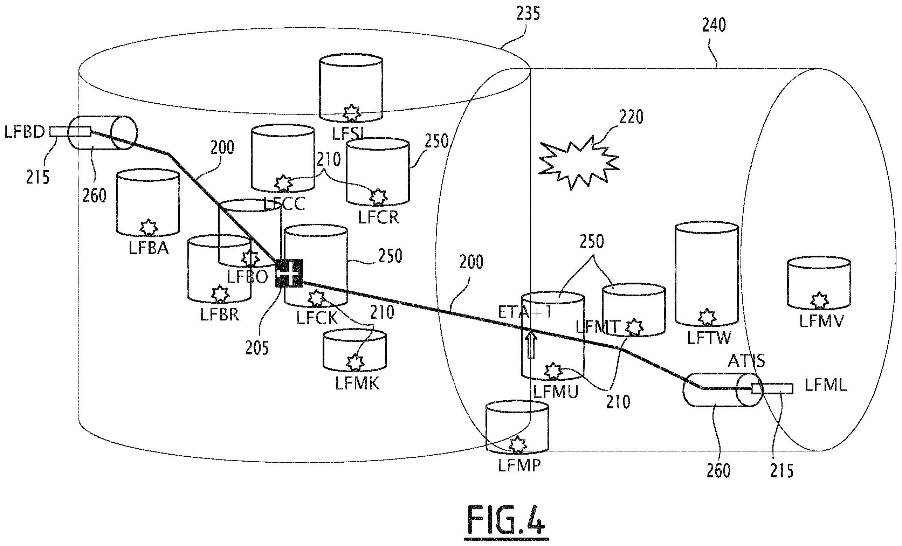

Sur les figures 3 et 4, le plan de vol de l'aéronef 10 est représenté sous forme d'une ligne brisée 200 en trait continu et épais, et la position de l'aéronef 10 est représentée à l'aide d'un pictogramme 205 symbolisant un avion, la figure 3 étant une représentation en deux dimensions, et la figure 4 étant une représentation en trois dimensions.

Chaque message acquis METAR, SPECI, TAF, VOLMET est représenté par une première étoile 210 située à l'emplacement du système respectif 24, 28 ayant fourni ledit message, avec en outre l'identifiant d'objet de mission correspondant au système 24, 28 ayant fourni ledit message, ledit identifiant étant sous forme du code ICAO à 4 lettres.

Chaque message acquis ATIS est représenté par un rectangle 215, également situé à l'emplacement du système ATIS ayant fourni le message correspondant, avec en outre l'identifiant d'objet de mission correspondant au système ATIS ayant fourni ledit message (LFBD, respectivement LFML sur les figures 3 et 4).

Chaque message acquis SIGMET, AIRMET est représenté par une deuxième étoile 220 située à l'emplacement du phénomène météorologique significatif reporté.

Le deuxième critère prédéfini est, par exemple, le positionnement de l'objet de mission associé à l'identifiant recherché à l'intérieur d'un volume cylindrique 230, 235 autour de la position courante de l'aéronef 10, le volume cylindrique 230, 235 s'étendant verticalement.

Sur la figure 3, un premier volume cylindrique 230 correspond au volume à l'intérieur duquel l'étape de recherche 120 est effectuée parmi les messages météorologiques acquis à l'étape 110 contenant des informations météorologiques observées, par exemple parmi les messages METAR, SPECI.

Un deuxième volume cylindrique 235, visible sur la figure 3, correspond à un volume à l'intérieur duquel l'étape de recherche 120 est effectuée parmi les messages météorologiques acquis à l'étape 110 contenant des informations météorologiques estimées, c'est-à-dire des prévisions météorologiques, par exemple parmi les messages TAF, VOLMET. Sur la figure 4, seul le deuxième volume 235 parmi les premier et deuxième volumes cylindriques 230, 235 est représenté par souci de clarté du dessin.

Les premier et deuxième volumes cylindriques 230, 235 s'étendent de préférence verticalement, et chaque volume cylindrique 230, 235 est, par exemple, centré radialement par rapport à la position courante de l'aéronef 10. Le deuxième volume cylindrique 235 présente un rayon de valeur supérieure à celui du premier volume cylindrique 230.

Les valeurs des rayons des premier et deuxième volumes cylindriques 230, 235 sont, par exemple des valeurs prédéfinies, exprimées en Nm.

En variante, la valeur du rayon du premier volume cylindrique 230 est calculée en fonction de la vitesse de l'aéronef 10, afin de correspondre à un temps de vol prédéfini. À titre d'exemple, la valeur du rayon du premier volume cylindrique 230 correspond à un temps de vol maximal de 30 minutes.

En variante, la valeur du rayon du deuxième volume cylindrique 235 est également calculée en fonction de la vitesse de l'aéronef 10, et correspond par exemple à un temps de vol compris entre 30 et 60 minutes.

Le troisième critère prédéfini est le positionnement de l'objet de mission associé à l'identifiant recherché à l'intérieur d'au moins un cylindre 235, 240 centré sur au moins une portion de la trajectoire estimée de l'aéronef 10 depuis sa position courante.

Un troisième volume cylindrique 240, visible sur les figures 3 et 4, est disposé autour d'une portion de la trajectoire estimée de l'aéronef correspondant à un horizon temporel plus lointain par rapport au deuxième volume cylindrique 235. Le troisième volume cylindrique 240 s'étend de préférence horizontalement.

Le troisième volume cylindrique 240 correspond à un autre volume à l'intérieur duquel l'étape de recherche 120 est effectuée parmi les messages météorologiques acquis à l'étape 110 contenant des informations météorologiques estimées, c'est-à-dire parmi les messages TAF, VOLMET par exemple.

Les valeurs des rayons des premier, deuxième et troisième volumes cylindriques 230, 235, 240 sont paramétrables, i.e. configurables, afin de permettre une meilleure maitrise des coûts de communication.

Autrement dit, le dispositif d'élaboration 18 sélectionne, en fonction du plan de vol de l'aéronef 10, les messages météorologiques à analyser sur un critère d'information observée dans un rayon maximal de 1 heure (selon la périodicité de l'information météorologique) de vol autour de la position actuelle de l'avion (période de validité du message météorologique), ceci correspondant au deuxième critère, et sur un critère d'information de prédiction au-delà de ce rayon le long d'un tunnel, à savoir le troisième volume cylindrique 240, d'une heure maximum de vol autour de la route prévue, ceci correspondant au troisième critère.

L'heure estimée de passage de l'aéronef 10 à proximité des systèmes 24, 28 correspondants est, par exemple, déterminée en considérant une route directe vers les points d'observation météorologique et vers les points de prédiction, également appelés points d'estimation, s'ils se situent dans le rayon d'action de l'aéronef 10. En dehors de ce rayon d'action et dans le tunnel de prédiction, l'heure de passage est celle du passage sur le point situé sur le trajet du plan de vol au plus proche du lieu de prédiction météorologique.

Les messages SIGMET, AIRMET, SPECI, SNOWTAM, ASHTAM contenant un événement significatif sont également filtrés afin de déterminer si une condition spéciale associée à l'événement significatif sera encore valide au moment du survol du point considéré.

Pour améliorer encore l'efficacité du procédé selon l'invention, le module de réception 42 est configuré pour obtenir, de la part du système de gestion du vol 12, la position courante et l'heure UTC de l'avion, le plan de vol, les points de déroutement ainsi que les heures estimées de passage sur les points autour du plan de vol, et les dégagements prévus en considérant une route directe.

Le module d'acquisition 40 acquiert quant à lui, de la part du système de communication 14, en particulier de sa partie numérique, les messages météorologiques valides, requis par l'équipage, envoyés de manière automatisée par les systèmes au sol 24, 28, ou requis par le dispositif d'élaboration 18.

En complément facultatif, le module d'acquisition 40 s'interface au système de communication 14, en particulier à sa partie audio, puis reconnaît et numérise chaque message ATIS, AIRMET diffusé par radiocommunication.

Le module de recherche 44 analyse alors chaque portion du plan de vol et la corrèle avec les messages météorologiques fournis au voisinage de ladite portion afin de retenir le message le plus approprié (validité géographique et temporelle) pour cette portion.

Si aucun message n'est disponible et que l'aéronef possède les capacités requises de communication, le module de recherche 44 sélectionne les systèmes 24, 28 disponibles à partir du plus proche du plan de mission vers une limite de corrélation définie les volumes 235 et 240 et demande automatiquement le message manquant via le système de communication 14 si le système 24, 28 considéré en question est situé à l'intérieur du cylindre ou du tunnel de prédiction de l'aéronef 10, tels que configurés par l'équipage. La sélection des systèmes 24, 28 disponibles est de préférence effectuée via une demande cyclique dans l'ordre suivant : d'abord les systèmes METAR de la position de l'aéronef 10 jusqu'à la limite du volume 235, puis les systèmes TAF depuis le plan de vol vers la limite du cylindre 240.

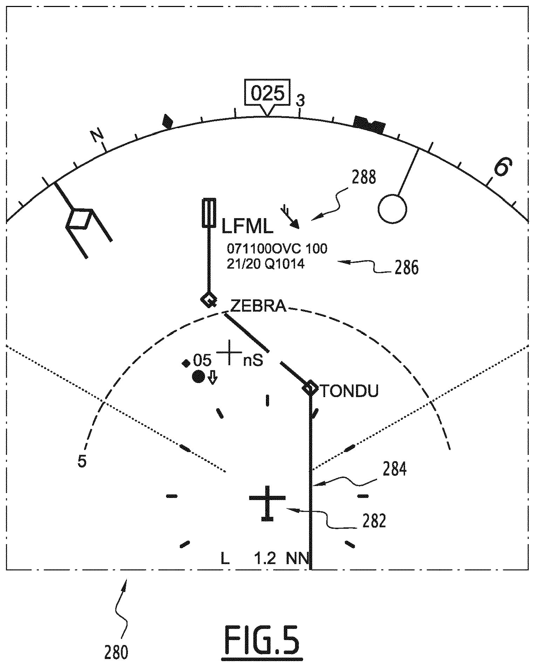

Le module d'élaboration 46 élabore enfin un message d'informations présentant une situation globale autour du plan de vol sur demande du pilote. Le message d'informations est, selon un exemple non couvert par l'invention, transmis au module d'affichage 20, afin d'être affiché sous forme graphique sur l'écran d'affichage, comme représenté sur la figure 5. En variante ou en complément, le message d'informations est transmis au module d'affichage 20 pour être affiché sous forme textuelle sur une unité de contrôle, non représentée. En variante ou en complément, le message d'informations est transmis à une imprimante, non représentée, en vue de son impression.

En complément facultatif, l'affichage du message d'informations par le module d'affichage 20 est configurable par un utilisateur, tel qu'un membre de l'équipage, afin de mettre en évidence certaines informations particulièrement pertinentes ou encore de masquer des informations superflues. Le pilote est ainsi en mesure de contrôler l'affichage de ces informations selon son besoin.

Sur la figure 5, représentant un exemple non couvert par l'invention, la situation globale est représentée sous forme d'une image 280 comportant un pictogramme 282 symbolisant la position de l'aéronef 10, une ligne brisée 284 symbolisant différentes portions du plan de vol à venir de l'aéronef, des données textuelles 286 associé à un identifiant détecté d'objet de mission, l'identifiant détecté étant LFML dans cet exemple, et une flèche stylisée 288, bien connue, fournissant une indication sur la direction et la force du vent.

En regard des figures 6 à 12, le mode de réalisation selon l'invention correspond à la mise en œuvre, lors de l'étape de recherche 120, du premier critère prédéfini. Comme indiqué précédemment, le premier critère prédéfini est l'inclusion de l'identifiant recherché d'objet de mission à la fois dans le message acquis et dans le plan de mission reçu.

Lors de l'étape d'affichage 130, chaque identifiant détecté d'objet de mission est ensuite affiché, dans le message correspondant, de manière distincte par rapport au ou aux autres identifiants d'objet de mission éventuellement affichés, comme cela est visible sur les figures 6 à 12, où chaque identifiant détecté est affiché en gras et en souligné.

La figure 6 représente une vue 300 d'un plan de situation météorologique obtenu à l'aide du procédé selon l'invention, par corrélation suivant le premier critère prédéfini entre le plan de mission contenu dans le tableau 1 ci-après et les messages METAR contenus dans le tableau 2 ci-après.

**Tableau 1**

| **PLAN DE MISSION** | | | |
|---|---|---|---|
| **SCENARIO** | **TYPE** | **IDENTIFIANT** | **DATE PREVUE** |
| NOMINAL | AEROPORT DE DEPART | LFQQ | 11 :00 |
| NOMINAL | POINT DE PASSAGE | LESDO | 11:08 |
| NOMINAL | POINT DE PASSAGE | DEKOD | 11:24 |
| NOMINAL | POINT DE PASSAGE | DEPOM | 11:32 |
| NOMINAL | POINT DE PASSAGE | LMG | 11:43 |
| NOMINAL | POINT DE PASSAGE | ENSAC | 12:13 |
| NOMINAL | AEROPORT D'ARRIVEE | LFBZ | 12:24 |
| ALTERNATIVE | AEROPORT EN ROUTE | LFBI | 11:43 |
| ALTERNATIVE | AEROPORT EN ROUTE | LFBL | 11:52 |
| ALTERNATIVE | AEROPORT DE DEROUTEMENT | LEBB | 12:39 |
| ALTERNATIVE | AEROPORT DE DEROUTEMENT | LFBO | 13:12 |
| ALTERNATIVE | AEROPORT DE DEROUTEMENT | LFBP | 12:31 |

**Tableau 2**

| **MESSAGES** | | |
|---|---|---|
| **FORMAT** | **TYPE** | **CONTENU** |
| TEXTUEL | RAPPORT D'OBSERVATION METEOROLOGIQUE | METAR LFAQ 101000Z AUTO 29006KT 9999 NSC 05/04 Q1010 |
| TEXTUEL | RAPPORT D'OBSERVATION METEOROLOGIQUE | METAR LFBA 101000Z AUTO VRB03KT 9999 FEW034 BKN068 07/05 Q1013= |
| TEXTUEL | RAPPORT D'OBSERVATION METEOROLOGIQUE | METAR LEBB 101030Z 30005KT 270V010 9999 FEW012 BKN032 19/17 Q1024 NOSIG |
| TEXTUEL | RAPPORT D'OBSERVATION METEOROLOGIQUE | METAR LFBI 101030Z AUTO 33008KT 300V020 9999 NSC 20/08 Q1021 |
| TEXTUEL | RAPPORT D'OBSERVATION METEOROLOGIQUE | METAR LFBL 101430Z AUTO 33006KT 9999 NSC 16/06 Q1021 |
| TEXTUEL | RAPPORT D'OBSERVATION METEOROLOGIQUE | METAR LFBP 101030Z 27007KT 9999 FEW007 SCT017 BKN022 17/15 Q1022 NOSIG |
| TEXTUEL | RAPPORT D'OBSERVATION METEOROLOGIQUE | METAR LFBO 101030Z AUTO 26011 KT 240V300 9999 FEW011 SCT048 23/12 Q1020 |
| TEXTUEL | RAPPORT D'OBSERVATION METEOROLOGIQUE | METAR LFBZ 101030Z 29006KT 260V320 9999 FEW008 BKN012 BKN040 18/16 Q1023 NOSIG |
| TEXTUEL | RAPPORT D'OBSERVATION METEOROLOGIQUE | METAR LFQQ 101030Z 30016KT 9999 BKN033 SCT066 16/08 Q1017 TEMPO 4000 SHRA BKN013TCU |
| TEXTUEL | RAPPORT D'OBSERVATION METEOROLOGIQUE | METAR LFTH 101400Z AUTO 28005KT 9999 NSC 09/05 Q1002= |
| TEXTUEL | RAPPORT D'OBSERVATION METEOROLOGIQUE | METAR LFTW 101000Z AUTO 33007KT 300V360 9999 NSC 08/M00 Q1007= |
| TEXTUEL | RAPPORT D'OBSERVATION METEOROLOGIQUE | METAR LEBB 101000Z 00000KT 9999 FEW015 SCT030 BKN040 07/06 Q1017 TEMPO 3000 SHRA SCT020CB= |

L'homme du métier comprendra alors que le plan de situation météorologique tel qu'affiché dans la vue 300 de la figure 6 comporte seulement les messages METAR dont l'identifiant d'objet de mission est également inclus dans le plan de mission reçu, tel qu'indiqué dans le tableau 1.

Les messages météorologiques, tels que les messages METAR, sont en outre classés pour afficher d'abord le message associé à l'aéroport de départ, puis le message associé à l'aéroport de destination, puis les messages associés aux aéroports en route et enfin les messages associés aux aéroports de déroutement, les différents types de messages étant indiqués dans le plan de mission.

Le module de recherche 44 est alors configuré pour retrouver, pour chaque objet du plan de mission du type d'objet de mission choisi pour la corrélation, l'ensemble des informations météorologiques ou aéronautiques dont le type correspond au type de l'information aéronautique ou météorologique choisi pour la corrélation et dont les identifiants et le type d'objet de mission correspondent à ceux de l'objet du plan de mission considéré.

En complément facultatif, chaque message d'informations comporte au moins une plage temporelle de validité de l'information et le plan de mission comporte des instants temporels associés à différents points de passage.

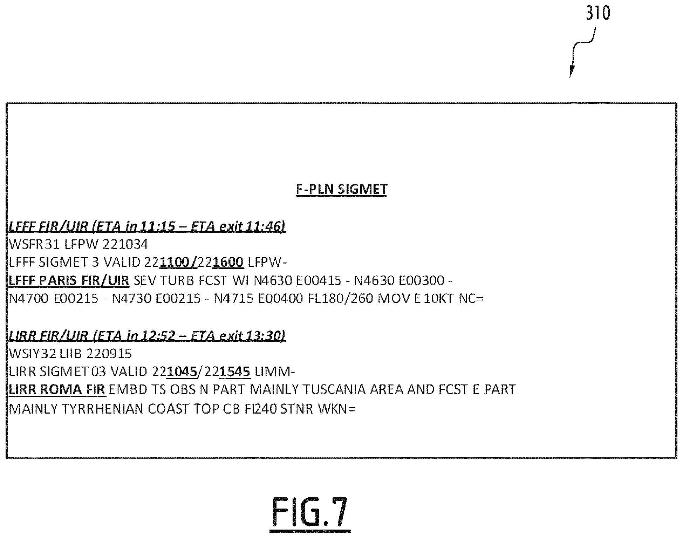

L'étape de recherche 120 comporte alors en outre la recherche, pour chaque message d'informations acquis, d'au moins une plage temporelle contenant, avec une marge d'erreur prédéfinie, au moins l'un des instants temporels contenus dans le plan de mission reçu. L'étape d'affichage 130 comporte alors en outre l'affichage de chaque plage temporelle détectée, comme représenté sur la figure 7.

Autrement dit, selon ce complément facultatif, le module de recherche 44 est alors configuré pour retrouver, pour chaque objet du plan de mission du type d'objet de mission choisi pour la corrélation, l'ensemble des informations météorologiques ou aéronautiques dont le type correspond au type de l'information aéronautique ou météorologique choisi pour la corrélation, dont les identifiants et le type d'objet de mission correspondent à ceux de l'objet du plan de mission considéré, et dont les dates de passage en l'objet considéré du plan de mission correspondent aux dates de validité de l'information aéronautique ou météorologique.

La figure 7 représente une vue 310 d'un plan de situation météorologique obtenu par corrélation suivant le premier critère prédéfini, selon ce complément en outre, entre le plan de mission contenu dans le tableau 3 ci-après et les messages SIGMET contenus dans le tableau 4 ci-après.

**Tableau 3**

| **PLAN DE MISSION** | | | |
|---|---|---|---|
| **SCENARIO** | **TYPE** | **IDENTIFIANT** | **DATE PREVUE** |
| NOMINAL | AEROPORT DE DEPART | LFPO | 11:15 |
| NOMINAL | FIR/UIR | LFFF | 11:15 |
| NOMINAL | FIR/UIR | LFEE | 11:46 |
| NOMINAL | FIR/UIR | LSAG | 12:02 |
| NOMINAL | FIR/UIR | LIMM | 12:21 |
| NOMINAL | FIR/UIR | LIRR | 12:52 |
| NOMINAL | AEROPORT D'ARRIVEE | LIRA | 13:30 |

**Tableau 4**

| **MESSAGES** | | |
|---|---|---|
| **FORMAT** | **TYPE** | **CONTENU** |
| TEXTUEL | PREVISION METEOROLOGIQUE SIGNIFICATIVE | WSDL31 EDZH 220720 EDWW SIGMET 1 VALID 220720/221000 EDZH-EDWW BREMEN FIR SEV ICE FZRA FCST S OF N5238 AND W OF E01043 SFC/1500FT STNR NC FCST 1000Z S OF N5238 AND W OF E01035= |
| TEXTUEL | PREVISION METEOROLOGIQUE SIGNIFICATIVE | WSIY32 LIIB 212133 LIRR SIGMET 06 VALID 212145/220145 LIMM-LIRR ROMA FIR EMBD TS FCST MAINLY TYRRHENIAN COAST TOP CB FL300 STNR WKN= |
| TEXTUEL | PREVISION METEOROLOGIQUE SIGNIFICATIVE | WSIY32 LIIB 220130 LIRR SIGMET 01 VALID 220145/220545 LIMM-LIRR ROMA FIR EMBD TS FCST MAINLY TYRRHENIAN COAST TOP CB FL300 STNR WKN= |
| TEXTUEL | PREVISION METEOROLOGIQUE SIGNIFICATIVE | WSIY32 LIIB 220527 LIRR SIGMET 02 VALID 220545/220945 LIMM-LIRR ROMA FIR EMBD TS FCST MAINLY TYRRHENIAN COAST TOP CB FL300 STNR WKN= |
| TEXTUEL | PREVISION METEOROLOGIQUE SIGNIFICATIVE | WSIY32 LIIB 220915 LIRR SIGMET 03 VALID 220945/221345 LIMM-LIRR ROMA FIR EMBD TS OBS N PART MAINLY TUSCANIA AREA AND FCST E PART MAINLY TYRRHENIAN COAST TOP CB FL240 STNR WKN= |
| TEXTUEL | PREVISION METEOROLOGIQUE SIGNIFICATIVE | WSFR31 LFPW 220352 LFFF SIGMET 1 VALID 220400/220800 LFPW-LFFF PARIS FIR/UIR SEV TURB FCST W OF LINE N5030 E00045 - N4715 E00130 FL160/240 MOV E 10KT NC= |
| TEXTUEL | PREVISION METEOROLOGIQUE SIGNIFICATIVE | WSFR31 LFPW 221034 LFFF SIGMET 3 VALID 221100/221600 LFPW-LFFF PARIS FIR/UIR SEV TURB FCST WI N4630 E00415 - N4630 E00300 - N4700 E00215 - N4730 E00215 - N4715 E00400 FL180/260 MOV E 10KT NC= |
| TEXTUEL | PREVISION METEOROLOGIQUE SIGNIFICATIVE | WSFR32 LFPW 220352 LFBB SIGMET 1 VALID 220400/220800 LFPW-LFBB BORDEAUX FIR/UIR SEV TURB FCST WI N4215 E00230 - N4230 E00045 - N4645 W00015 - N4715 W00015 - N4715 E00130 FL160/240 MOV E 10KT NC= |
| TEXTUEL | PREVISION METEOROLOGIQUE SIGNIFICATIVE | WSFR32 LFPW 220751 LFBB SIGMET 2 VALID 220800/221200 LFPW-LFBB BORDEAUX FIR/UIR SEV TURB FCST WI N4630 E00300 - N4230 E00230 - N4715 E00100 - N4715 E00200 - N4630 E00300 FL160/260 MOV E 10KT NC= |
| TEXTUEL | PREVISION METEOROLOGIQUE SIGNIFICATIVE | WSFR34 LFPW 220354 LFMM SIGMET 1 VALID 220400/220800 LFPW-LFMM MARSEILLE FIR/UIR SEV TURB OBS WI N4030 E00430 - N4200 E00430 - N4215 E00230 - N4345 E00245 - N4430 E00445 - N4130 E00715 SFC/FL050 STNR NC= |

Selon un autre complément facultatif, le module de recherche 44 est alors configuré pour retrouver parmi l'ensemble des informations aéronautiques ou météorologiques retrouvées, comme décrit précédemment, les parties des informations aéronautiques ou météorologiques, dits fragments applicables, dont les dates de validité correspondent exactement, ou avec une tolérance dépendante du type d'objet de mission considéré, aux dates de passage de l'objet du plan de mission associé à l'information aéronautique ou météorologique.

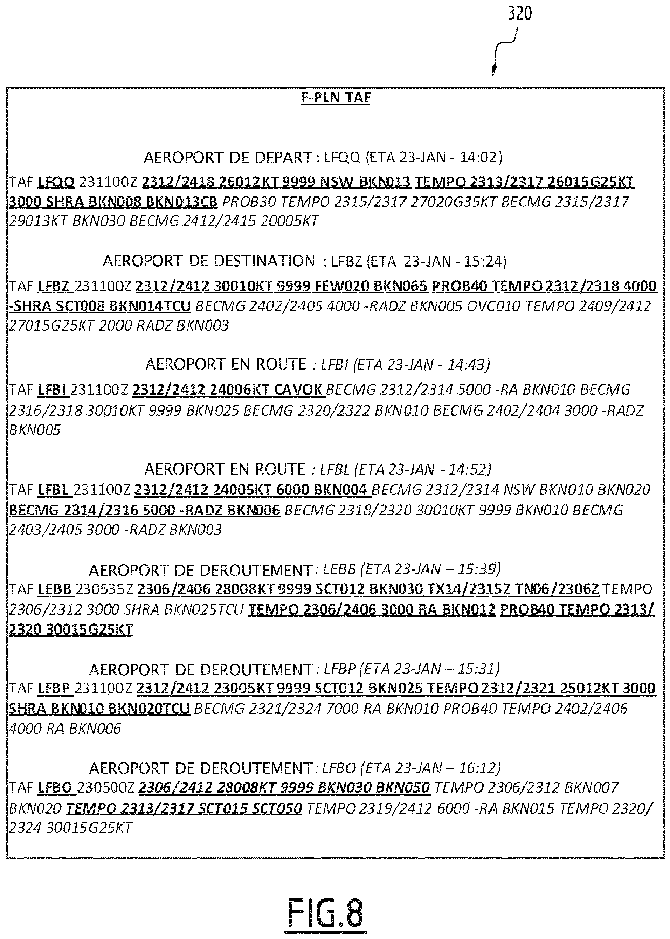

La figure 8 représente une vue 320 d'un plan de situation météorologique obtenu par corrélation suivant le premier critère prédéfini, selon cet autre complément, entre le plan de mission contenu dans le tableau 5 ci-après et les messages TAF contenus dans le tableau 6 ci-après.

**Tableau 5**

| **PLAN DE MISSION** | | | |
|---|---|---|---|
| **SCENARIO** | **TYPE** | **IDENTIFIANT** | **DATE PREVUE** |
| NOMINAL | AEROPORT DE DEPART | LFQQ | 23-JAN - 14:02 |
| NOMINAL | POINT DE PASSAGE | LESDO | 23-JAN - 14:08 |
| NOMINAL | POINT DE PASSAGE | DEKOD | 23-JAN - 14:24 |
| NOMINAL | POINT DE PASSAGE | DEPOM | 23-JAN - 14:32 |
| NOMINAL | POINT DE PASSAGE | LMG | 23-JAN - 14:43 |
| NOMINAL | POINT DE PASSAGE | ENSAC | 23-JAN - 15:13 |
| NOMINAL | AEROPORT D'ARRIVEE | LFBZ | 23-JAN - 15:24 |
| ALTERNATIVE | AEROPORT EN ROUTE | LFBI | 23-JAN - 14:43 |
| ALTERNATIVE | AEROPORT EN ROUTE | LFBL | 23-JAN - 14:52 |
| ALTERNATIVE | AEROPORT DE DEROUTEMENT | LEBB | 23-JAN - 15:39 |
| ALTERNATIVE | AEROPORT DE DEROUTEMENT | LFBP | 23-JAN - 15:31 |
| ALTERNATIVE | AEROPORT DE DEROUTEMENT | LFBO | 23-JAN - 16:12 |

**Tableau 6**

| **MESSAGES** | | |
|---|---|---|
| **FORMAT** | **TYPE** | **CONTENU** |
| TEXTUEL | RAPPORT PREVISION METEOROLOGIQUE | TAF LFLX 231100Z 2312/2418 24010KT 5000 BR OVC003 TEMPO 2312/2318 9999 NSW BKN015 BECMG 2406/2409 RA BECMG 2409/2412 18006KT |
| TEXTUEL | RAPPORT PREVISION METEOROLOGIQUE | TAF LFMH 231100Z 2312/2412 VRB02KT 9999 BKN040 TEMPO 2312/2315 SCT040 BECMG 2320/2322 34008KT BKN020 TEMPO 2320/2406 4000 RA OVC015 TEMPO 2406/2412 7000 -SHRA |
| TEXTUEL | RAPPORT PREVISION METEOROLOGIQUE | TAF LFQQ 231100Z 2312/2418 26012KT 9999 NSW BKN013 TEMPO 2313/2317 26015G25KT 3000 SHRA BKN008 BKN013CB PROB30 TEMPO 2315/2317 27020G35KT BECMG 2315/2317 29013KT BKN030 BECMG 2412/2415 20005KT |
| TEXTUEL | RAPPORT PREVISION METEOROLOGIQUE | TAF LFBZ 231100Z 2312/2412 30010KT 9999 FEW020 BKN065 PROB40 TEMPO 2312/2318 4000 -SHRA SCT008 BKN014TCU BECMG 2402/2405 4000 -RADZ BKN005 OVC010 TEMPO 2409/2412 27015G25KT 2000 RADZ BKN003 |
| TEXTUEL | RAPPORT PREVISION METEOROLOGIQUE | TAF LFBI 231100Z 2312/2412 24006KT CAVOK BECMG 2312/2314 5000 -RA BKN010 BECMG 2316/2318 3001 0KT 9999 BKN025 BECMG 2320/2322 BKN010 BECMG 2402/2404 3000 -RADZ BKN005 |
| TEXTUEL | RAPPORT PREVISION METEOROLOGIQUE | TAF LFBL 231100Z 2312/2412 24005KT 6000 BKN004 BECMG 2312/2314 NSW BKN010 BKN020 BECMG 2314/2316 5000 -RADZ BKN006 BECMG 2318/2320 30010KT 9999 BKN010 BECMG 2403/2405 3000 -RADZ BKN003 |
| TEXTUEL | RAPPORT PREVISION METEOROLOGIQUE | TAF LEBB 230535Z 2306/2406 28008KT 9999 SCT012 BKN030 TX14/2315Z TN06/2306Z TEMPO 2306/2312 3000 SHRA BKN025TCU TEMPO 2306/2406 3000 RA BKN012 PROB40 TEMPO 2313/2320 30015G25KT |
| TEXTUEL | RAPPORT PREVISION METEOROLOGIQUE | TAF LFBP 231100Z 2312/2412 23005KT 9999 SCT012 BKN025 TEMPO 2312/2321 25012KT 3000 SHRA BKN010 BKN020TCU BECMG 2321/2324 7000 RA BKN010 PROB40 TEMPO 2402/2406 4000 RA BKN006 |
| TEXTUEL | RAPPORT PREVISION METEOROLOGIQUE | TAF LFBO 230500Z 2306/2412 28008KT 9999 BKN030 BKN050 TEMPO 2306/2312 BKN007 BKN020 TEMPO 2313/2317 SCT015 SCT050 TEMPO 2319/2412 6000 -RA BKN015 TEMPO 2320/2324 30015G25KT |
| TEXTUEL | RAPPORT PREVISION METEOROLOGIQUE | TAF LFBG 230500Z 2306/2406 23003KT 0500 FG NSC BECMG 2309/2311 22010KT 9999 NSW SCT030 TEMPO 2314/2318 4000 -SHRA SCT010 BKN020TCU BECMG 24/04/2406 BKN015 BKN030 |
| TEXTUEL | RAPPORT PREVISION METEOROLOGIQUE | TAF LFBT 231100Z 2312/2412 26010KT 9999 FEW020 BKN040 PROB30 TEMPO 2312/2316 4000 -SHRA BKN013TCU BECMG 2318/2320 4000 -RA BKN008 OVC015 PROB40 2409/2412 2000 RADZ BKN003 |

L'homme du métier notera que les informations météorologiques corrélées par identifiant d'objet de mission apparaissent dans l'ordre défini par le plan de mission.

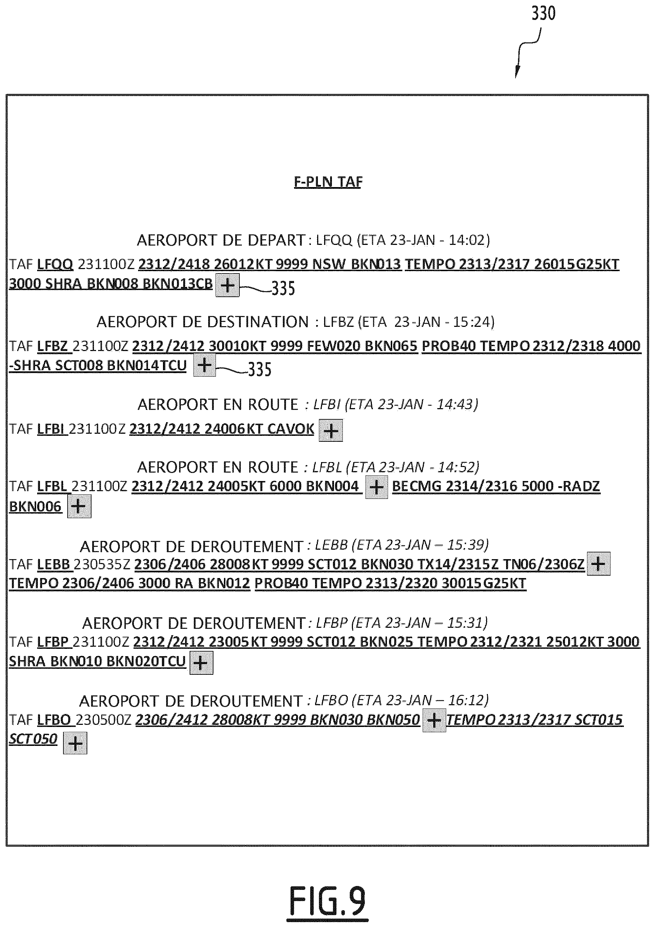

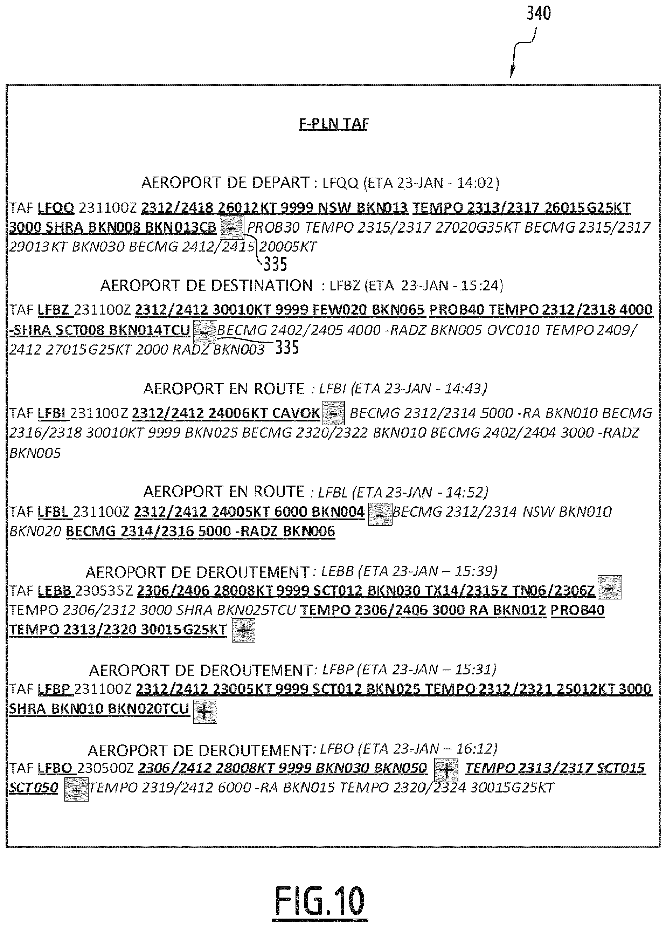

L'homme du métier observera que les informations météorologiques corrélées temporellement par fragments sont soulignées dans la vue 320, une variante facultative étant de les masquer, en rendant possible leur affichage par des boutons de contrôle 335, représentés sur les figures 9 et 10 sous forme de pictogrammes contenant un signe « + » pour l'affichage d'un fragment non corrélé préalablement masqué, respectivement un signe « - » pour le masquage d'un fragment non corrélé correspondant. Lorsque l'utilisateur agit sur le bouton « + », le fragment du message non corrélé apparaît et le « + » est remplacé par un « - ». Si l'utilisateur agit sur le bouton « - », le fragment du message non corrélé est masqué, et le « - » est remplacé par un « + ».

Les vues 330, 340 représentées respectivement sur les figures 9 et 10 correspondent au même plan de mission et aux mêmes messages TAF que ceux utilisés pour la vue 320 sur la figure 8, seuls les fragments non corrélés étant masqués ou non d'une figure à l'autre. Autrement dit, les vues 330 et 340 ont été obtenues à partir du plan de mission contenu dans le tableau 5 et des messages TAF contenus dans le tableau 6.

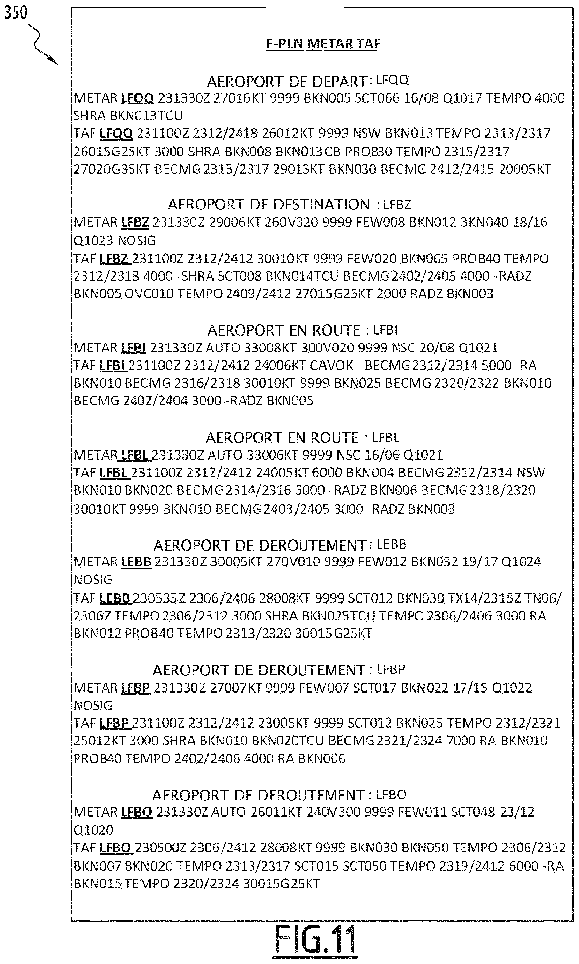

A titre d'exemples complémentaires, la figure 11 représente une vue 350 d'un plan de situation météorologique obtenu lorsque des messages d'informations de deux types différents sont utilisés simultanément, à savoir les messages METAR et TAF dans cet exemple, avec la corrélation selon le premier critère, sans prise en compte de l'un des compléments facultatifs.

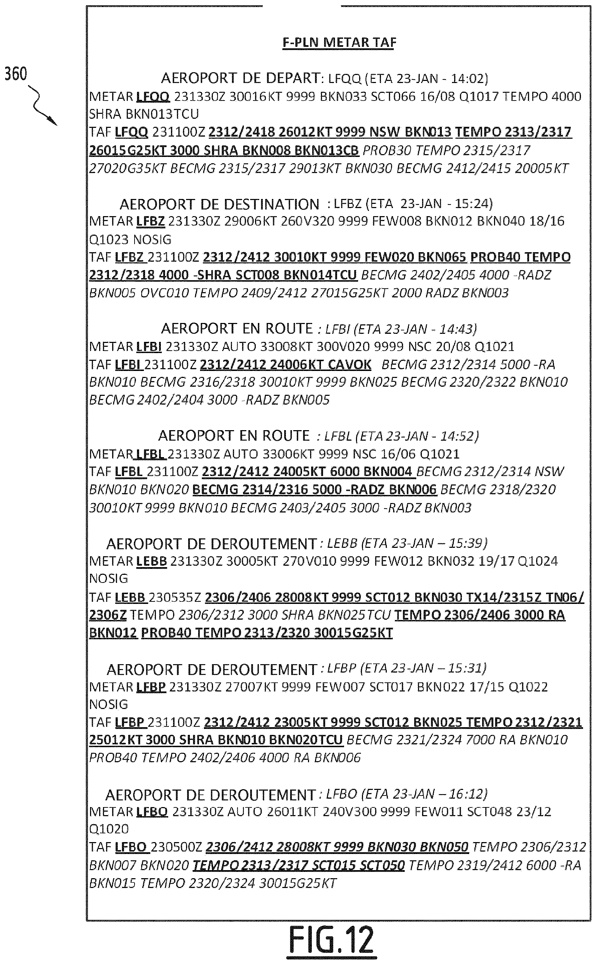

La figure 12 représente une vue 350 d'un plan de situation météorologique obtenu lorsque des messages d'informations de deux types différents sont utilisés simultanément, à savoir les messages METAR et TAF dans cet exemple, avec en outre une corrélation distincte d'un type de message acquis à l'autre :
- corrélation selon le premier critère, sans prise en compte de l'un des compléments facultatifs, pour les messages METAR, et
- corrélation selon le premier critère et avec l'autre complément, c'est-à-dire avec corrélation temporelle par fragments, pour les messages TAF.

L'homme du métier comprendra alors que les différentes variantes de corrélation décrites selon l'invention sont utilisables avec des messages acquis de différents types, comme illustré sur la figure 11 avec les messages METAR et TAF, et/ou de manière combinée, en utilisant une première variante de corrélation pour un premier type de message acquis et une deuxième variante de corrélation pour un deuxième type de message acquis, comme décrit ci-dessus dans l'exemple de la figure 12.

On conçoit ainsi que le dispositif d'élaboration 18, le système d'affichage 22 et le procédé d'affichage selon l'invention permettent de faciliter l'analyse par l'équipage de l'aéronef 10, d'un message reçu parmi un message météorologique et un message d'information aéronautique, tel qu'un message de type AIS-MET.

## Revendications

1. Procédé d'affichage d'informations relatives à un aéronef (10), le procédé étant mis en œuvre par ordinateur et comportant les étapes suivantes°:
- la réception (100) d'un plan de mission de l'aéronef (10) ;
- l'acquisition (110) d'au moins un message parmi un message météorologique et un message d'information aéronautique, chaque message comportant au moins un identifiant d'objet de mission, chaque identifiant d'objet de mission étant conforme au document ICAO 7910 ;
- la recherche (120), parmi le ou les identifiants d'objet de mission contenus dans chaque message acquis, d'au moins un identifiant d'objet de mission vérifiant au moins un critère parmi des premier, deuxième et troisième critères prédéfinis, le premier critère étant fonction d'un plan de mission reçu, le deuxième critère étant fonction d'une position courante de l'aéronef, et le troisième critère étant fonction à la fois de la position courante de l'aéronef et du plan de mission reçu ; le plan de mission reçu comportant des objets de mission, chaque objet de mission ayant un identifiant associé ; le premier critère prédéfini étant l'inclusion de l'identifiant recherché d'objet de mission à la fois dans le message acquis et dans le plan de mission reçu ; et
- en cas de détection d'au moins un identifiant d'objet de mission vérifiant au moins l'un des premier, deuxième et troisième critères prédéfinis, l'affichage (130) de chaque identifiant détecté d'objet de mission, chaque identifiant détecté d'objet de mission étant affiché, dans le message correspondant, de manière distincte par rapport au ou aux autres identifiants d'objet de mission éventuellement affichés.

2. Procédé selon la revendication 1, dans lequel chaque message météorologique est choisi parmi le groupe consistant en : un message METAR, un message SPECI, un message TAF, un message PIREP, un message SIGMET, un message AIRMET et un message VOLMET.

3. Procédé selon la revendication 1 ou 2, dans lequel chaque message d'information aéronautique est choisi parmi le groupe consistant en : un message ATIS, un message NOTAM, un message SNOWTAM et un message ASHTAM.

4. Procédé selon l'une quelconque des revendications précédentes, dans lequel chaque objet de mission utilisé pour l'étape de recherche est choisi parmi un aéroport et une zone d'espace aérien.

5. Procédé selon l'une quelconque des revendications précédentes, dans lequel chaque message d'informations comporte au moins une plage temporelle et le plan de mission comporte des instants temporels, l'étape de recherche (120) comporte en outre la recherche, pour chaque message d'informations acquis, d'au moins une plage temporelle contenant, avec une marge d'erreur prédéfinie, au moins l'un des instants temporels contenus dans le plan de mission reçu, et l'étape d'affichage (130) comportant en outre l'affichage de chaque plage temporelle détectée.

6. Procédé selon l'une quelconque des revendications précédentes, dans lequel lors de l'étape de recherche (120), le deuxième critère prédéfini est le positionnement de l'objet de mission associé à l'identifiant recherché à l'intérieur d'un volume cylindrique (230) autour de la position courante de l'aéronef, le volume cylindrique (230) s'étendant verticalement.

7. Procédé selon la revendication 6, dans lequel la recherche suivant le deuxième critère prédéfini est effectuée seulement parmi le ou les messages météorologiques acquis contenant des informations météorologiques observées,
chaque message météorologique étant de préférence choisi parmi un message METAR et un message SPECI.

8. Procédé selon l'une quelconque des revendications précédentes, dans lequel le procédé comprend en outre le calcul, à partir du plan de mission reçu, d'une trajectoire estimée de l'aéronef depuis sa position courante, et
lors de l'étape de recherche (120), le troisième critère prédéfini est le positionnement de l'objet de mission associé à l'identifiant recherché à l'intérieur d'au moins un cylindre (235, 240) disposé autour d'au moins une portion de la trajectoire estimée de l'aéronef depuis sa position courante.

9. Procédé selon la revendication 8, dans lequel la recherche suivant le troisième critère prédéfini est effectuée seulement parmi le ou les messages météorologiques acquis contenant des informations météorologiques estimées,
chaque message météorologique étant de préférence choisi parmi un message TAF et un message VOLMET.

10. Produit programme d'ordinateur comportant des instructions logicielles qui, lorsqu'elles sont mises en œuvre par un ordinateur couplé au système électronique de la revendication 12, mettent en œuvre un procédé selon l'une quelconque des revendications précédentes.

11. Dispositif électronique (18) d'élaboration d'informations relatives à un aéronef (10), comprenant :
- un module (40) d'acquisition d'au moins un message parmi un message météorologique et un message d'information aéronautique, chaque message comportant au moins un identifiant d'objet de mission, chaque identifiant d'objet de mission étant conforme au document ICAO 7910 ;
- un module (42) de réception d'un plan de mission de l'aéronef (10) ;
- un module (44) de recherche, parmi le ou les identifiants d'objet de mission contenus dans chaque message acquis, d'au moins un identifiant d'objet de mission vérifiant au moins un critère parmi des premier, deuxième et troisième critères prédéfinis, le premier critère étant fonction d'un plan de mission reçu, le deuxième critère étant fonction d'une position courante de l'aéronef, et le troisième critère étant fonction à la fois de la position courante de l'aéronef et du plan de mission reçu ; le plan de mission reçu comportant des objets de mission, chaque objet de mission ayant un identifiant associé ; le premier critère prédéfini étant l'inclusion de l'identifiant recherché d'objet de mission à la fois dans le message acquis et dans le plan de mission reçu ; et
- un module (46) d'élaboration, en cas de détection d'au moins un identifiant d'objet de mission vérifiant au moins l'un des premier, deuxième et troisième critères prédéfinis, d'un message d'informations contenant chaque identifiant détecté d'objet de mission, chaque identifiant détecté d'objet de mission étant affiché, dans le message correspondant, de manière distincte par rapport au ou aux autres identifiants d'objet de mission éventuellement affichés.

12. Système électronique (22) d'affichage d'informations relatives à un aéronef (10), comprenant un dispositif électronique (18) d'élaboration desdites informations relatives à l'aéronef et un module (20) d'affichage des informations élaborées,
**caractérisé en ce que** le dispositif électronique d'élaboration (18) est selon la revendication 11.

## Patentansprüche

1. Verfahren zum Anzeigen von Informationen, welche ein Luftfahrzeug (10) betreffen, wobei das Verfahren mittels eines Computers durchgeführt wird und die folgenden Schritte aufweist:
- Empfangen (100) eines Missionsplans des Luftfahrzeugs (10),
- Erfassen (110) von zumindest einer Nachricht aus einer meteorologischen Nachricht und einer Aeronautische-Information-Nachricht, wobei jede Nachricht mindestens einen Missionsobjekt-Identifikator aufweist, wobei jeder Missionsobjekt-Identifikator konform mit dem Dokument ICAO 7910 ist,
- Suchen (120) unter dem oder den Missionsobjekt-Identifikatoren, welche in jeder erfassten Nachricht enthalten sind, von zumindest einem Missionsobjekt-Identifikator, welcher mindestens ein Kriterium von einem ersten, einem zweiten und einem dritten vordefinierten Kriterium verifiziert, wobei das erste Kriterium abhängig von einem empfangenen Missionsplan ist, wobei das zweite Kriterium abhängig von einer gegenwärtigen Position des Luftfahrzeugs ist, und wobei das dritte Kriterium zugleich abhängig von der gegenwärtigen Position des Luftfahrzeugs und vom empfangenen Missionsplan ist, wobei der empfangene Missionsplan Missionsobjekte aufweist, wobei jedes Missionsobjekt einen assoziierten Identifikator hat, wobei das erste vordefinierte Kriterium die Einbeziehung des gesuchten Missionsobjekt-Identifikators zugleich in der erfassten Nachricht und im empfangenen Missionsplan ist, und
im Falle des Detektierens von zumindest einem Missionsobjekt-Identifikator, welcher zumindest eines des ersten, des zweiten und des dritten vordefinierten Kriteriums verifiziert, Anzeigen (130) jedes detektierten Missionsobjekt-Identifikators, wobei jeder detektierte Missionsobjekt-Identifikator in der korrespondierenden Nachricht auf eine Weise angezeigt wird, welche verschieden ist bezüglich des oder der anderen Missionsobjekt-Identifikatoren, welche gegebenenfalls angezeigt werden.

2. Verfahren gemäß Anspruch 1, wobei jede meteorologische Nachricht ausgewählt ist aus der Gruppe, welche besteht aus: einer METAR-Nachricht, einer SPECI-Nachricht, einer TAF-Nachricht, einer PIREP-Nachricht, einer SIGMET-Nachricht, einer AIRMET-Nachricht und einer VOLMET-Nachricht.

3. Verfahren gemäß Anspruch 1 oder 2, wobei jede Aeronautische-Information-Nachricht ausgewählt ist aus der Gruppe, welche besteht aus: einer ATIS-Nachricht, einer NOTAM-Nachricht, einer SNOWTAM-Nachricht und einer ASHTAM-Nachricht.

4. Verfahren gemäß irgendeinem der vorherigen Ansprüche, wobei jedes für den Suchen-Schritt verwendete Missionsobjekt ausgewählt ist aus einem Flughafen und einer Luftraum-Zone.

5. Verfahren gemäß irgendeinem der vorherigen Ansprüche, wobei jede Informationen-Nachricht zumindest einen Zeitbereich aufweist und der Missionsplan Zeitpunkte aufweist, wobei der Suchen-Schritt (120) ferner aufweist das Suchen, für jede erfasste Informationen-Nachricht, von zumindest einem Zeitbereich, welcher, mit einer vordefinierten Fehlerspanne, zumindest einen der Zeitpunkte enthält, welche in dem empfangenen Missionsplan enthalten sind, und der Anzeigen-Schritt (130) ferner das Anzeigen jedes detektierten Zeitbereichs aufweist.

6. Verfahren gemäß irgendeinem der vorherigen Ansprüche, wobei während des Suchen-Schritts (120) das zweite vordefinierte Kriterium die Positionierung des Missionsobjekts, welches mit dem gesuchten Identifikator assoziiert ist, innerhalb eines zylindrischen Volumens (230) um die gegenwärtige Position des Luftfahrzeugs herum ist, wobei sich das zylindrische Volumen (230) vertikal erstreckt.

7. Verfahren gemäß Anspruch 6, wobei die Suche gemäß dem zweiten vordefinierten Kriterium nur durchgeführt wird unter der oder den erfassten meteorologischen Nachrichten, welche beobachtete meteorologische Informationen enthalten,
wobei jede meteorologische Nachricht vorzugsweise ausgewählt ist aus einer METAR-Nachricht und einer SPECI-Nachricht.

8. Verfahren gemäß irgendeinem der vorherigen Ansprüche, wobei das Verfahren ferner aufweist das Berechnen, ausgehend vom empfangenen Missionsplan, einer abgeschätzten Trajektorie des Luftfahrzeugs von seiner gegenwärtigen Position aus, und,
während des Suchen-Schrittes (120), das dritte vordefinierte Kriterium die Positionierung des Missionsobjekts, welches mit dem gesuchten Identifikator assoziiert ist, innerhalb von zumindest einem Zylinder (235, 240) ist, welcher um zumindest einen Teil der abgeschätzten Trajektorie des Luftfahrzeugs von seiner gegenwärtigen Position aus herum angeordnet ist.

9. Verfahren gemäß Anspruch 8, wobei die Suche gemäß dem dritten vordefinierten Kriterium nur durchgeführt wird unter der oder den erfassten meteorologischen Nachrichten, welche abgeschätzte meteorologische Informationen enthalten,
wobei jede meteorologische Nachricht vorzugsweise ausgewählt ist aus einer TAF-Nachricht und einer VOLMET-Nachricht.

10. Computerprogrammprodukt, welches Logikinformationen aufweist, welche, wenn sie mittels eines Computers, welcher an das elektronische System des Anspruchs 12 gekoppelt ist, ausgeführt werden, ein Verfahren gemäß irgendeinem der vorherigen Ansprüche ausführen.

11. Elektronische Vorrichtung (18) zum Erstellen von Informationen, welche ein Luftfahrzeug (10) betreffen, aufweisend:
- ein Modul (40) zum Erfassen von zumindest einer Nachricht aus einer meteorologischen Nachricht und einer Aeronautische-Information-Nachricht, wobei jede Nachricht mindestens einen Missionsobjekt-Identifikator aufweist, wobei jeder Missionsobjekt-Identifikator konform mit dem Dokument ICAO 7910 ist,
- ein Modul (42) zum Empfangen eines Missionsplans des Luftfahrzeugs (10),
- ein Modul (44) zum Suchen unter dem oder den Missionsobjekt-Identifikatoren, welche in jeder erfassten Nachricht enthalten sind, nach zumindest einem Missionsobjekt-Identifikator, welcher mindestens ein Kriterium von einem ersten, einem zweiten und einem dritten vordefinierten Kriterium verifiziert, wobei das erste Kriterium abhängig von einem empfangenen Missionsplan ist, wobei das zweite Kriterium abhängig von einer gegenwärtigen Position des Luftfahrzeugs ist, und wobei das dritte Kriterium zugleich abhängig von der gegenwärtigen Position des Luftfahrzeugs und vom empfangenen Missionsplan ist, wobei der empfangene Missionsplan Missionsobjekte aufweist, wobei jedes Missionsobjekt einen assoziierten Identifikator hat, wobei das erste vordefinierte Kriterium die Einbeziehung des gesuchten Missionsobjekt-Identifikators zugleich in der erfassten Nachricht und im empfangenen Missionsplan ist, und
- ein Modul (46) zum Erstellen, im Falle des Detektierens von zumindest einem Missionsobjekt-Identifikator, welcher zumindest eines des ersten, des zweiten und des dritten vordefinierten Kriteriums verifiziert, einer Informationen-Nachricht, welche jeden detektierten Missionsobjekt-Identifikator enthält, wobei jeder detektierte Missionsobjekt-Identifikator in der korrespondierenden Nachricht auf eine Weise angezeigt wird, welche verschieden ist bezüglich des oder der anderen Missionsobjekt-Identifikatoren, welche gegebenenfalls angezeigt werden.

12. Elektronisches System (22) zum Anzeigen von Informationen, welche ein Luftfahrzeug (10) betreffen, aufweisend eine elektronische Vorrichtung (18) zum Erstellen der besagten Informationen, welche ein Luftfahrzeug betreffen, und ein Modul (20) zum Anzeigen der erstellten Informationen,
**dadurch gekennzeichnet, dass** die elektronische Vorrichtung (18) gemäß Anspruch 11 ist.

## Claims

1. A method for displaying information relative to an aircraft (10), the method being implemented by a computer and including the following steps:
- receiving (100) a mission plan for the aircraft (10);
- acquiring (110) at least one message from among a meteorological message and an aeronautical information message, each message including at least one mission object identifier, each mission object identifier being according to document ICAO 7910;
- searching (120), among the mission object identifier(s) contained in each acquired message, for at least one mission object identifier verifying at least one criterion from among first, second and third predefined criteria, the first criterion depending on a received mission plan, the second criterion depending on the current position of the aircraft, and the third criterion depending on both the current position of the aircraft and the received mission plan; the received mission plan including mission objects, each mission object having an associated identifier; the first predefined criterion being the inclusion of the searched mission object identifier both in the acquired message and in the received mission plan; and
- if at least one mission object identifier is detected verifying at least one of the first, second and third predefined criteria, displaying (130) each detected mission object identifier, each detected mission object identifier being displayed, in the corresponding message, in a distinct manner with respect to the other mission object identifier(s) potentially displayed.

2. The method according to claim 1, wherein each meteorological message is chosen from among the group consisting of: a METAR message, a SPECI message, a TAF message, a PIREP message, a SIGMET message, an AIRMET message and a VOLMET message.

3. The method according to claim 1 or 2, wherein each aeronautical message is chosen from among the group consisting of: an ATIS message, a NOTAM message, a SNOWTAM message and an ASHTAM message.

4. The method according to any one of the preceding claims, wherein each mission object used for the search step is chosen from among an airport and an airspace zone.

5. The method according to any one of the preceding claims, wherein each information message includes at least one time range and the mission plan includes time moments, the search step (120) further includes the search, for each acquired information message, for at least one time range containing, with a predefined margin of error, at least one of the time moments contained in the received mission plan, and the display step (130) further including the display of each detected time range.

6. The method according to any one of the preceding claims, wherein, during the search step (120), the second predefined criterion is the positioning of the mission object associated with the searched identifier within a cylindrical volume (230) around the current position of the aircraft, the cylindrical volume (230) extending vertically.

7. The method according to claim 6, wherein the search according to the second predefined criterion is done only among the acquired meteorological message(s) containing observed meteorological information,
each meteorological message preferably being chosen from among a METAR message and a SPECI message.

8. The method according to any one of the preceding claims, wherein the method further comprises calculating, from the received mission plan, an estimated trajectory of the aircraft from its current position, and
during the search step (120), the third predefined criterion is the position of the mission object associated with the searched identifier within at least one cylinder (235, 240) positioned around at least one portion of the estimated trajectory of the aircraft from its current position.

9. The method according to claim 8, wherein the search according to the third predefined criterion is done only among the acquired meteorological message(s) containing estimated meteorological information.
each meteorological message preferably being chosen from among a TAF message and a VOLMET message.

10. A computer program product including software instructions which, when implemented by a computer coupled to the electronic system of claim 12, implement a method according to any one of the preceding claims.

11. An electronic producing device (18) for producing information relative to an aircraft (10), comprising:
- a module (40) for acquiring at least one message from among a meteorological message and an aeronautical information message, each message including at least one mission object identifier, each mission object identifier being according to document ICAO 7910;
- a module (42) for receiving a mission plan for the aircraft (10);
- a module (44) for searching, among the mission object identifier(s) contained in each acquired message, for at least one mission object identifier verifying at least one criterion from among first, second and third predefined criteria, the first criterion depending on a received mission plan, the second criterion depending on the current position of the aircraft, and the third criterion depending on both the current position of the aircraft and the received mission plan; the received mission plan including mission objects, each mission object having an associated identifier; the first predefined criterion being the inclusion of the searched mission object identifier both in the acquired message and in the received mission plan; and
- a module (46) for developing, if at least one mission object identifier is detected verifying at least one of the first, second and third predefined criteria, an information message including each detected mission object identifier, each detected mission object identifier being displayed, in the corresponding message, in a distinct manner with respect to the other mission object identifier(s) potentially displayed.

12. An electronic system (22) for displaying information relative to an aircraft (10), comprising an electronic producing device (18) for producing said information relative to the aircraft and a display module (20) for displaying said developed information,
**characterized in that** the electronic producing device (18) is according to claim 11.
